Europäisches Patentamt

(19) European Patent Office

Office européen des brevets

(11) Publication number: **0 047 564**
**B1**

## (12) EUROPEAN PATENT SPECIFICATION

(45) Date of publication of patent specification: **15.01.86**

(51) Int. Cl.⁴: **F 16 B 12/48,** A 47 C 3/00

(21) Application number: **81201017.1**

(22) Date of filing: **10.09.81**

(54) A furniture chassis.

(30) Priority: **10.09.80 DK 3838/80**

(43) Date of publication of application:
**17.03.82 Bulletin 82/11**

(45) Publication of the grant of the patent:
**15.01.86 Bulletin 86/03**

(84) Designated Contracting States:
**AT BE CH DE FR GB IT LI NL SE**

(56) References cited:
**DE-C- 333 832**
**FR-A-1 225 389**
**GB-A- 788 665**
**US-A-2 703 136**

(73) Proprietor: **Magnus Olesen A/S
Tönderingvej 10 Durup
DK-7870 Roslev (DK)**

(72) Inventor: **Olesen, Flemming
Stadionvej 5 Durup
D-7870 Roslev (DK)**

(74) Representative: **Urbanus, Henricus Maria, lr.
et al
c/o Vereenigde Octrooibureaux Nieuwe
Parklaan 107
NL-2587 BP 's-Gravenhage (NL)**

Courier Press, Leamington Spa, England.

## Description

The invention relates to a furniture chassis having a holding body such as a chair seat frame and elongate construction parts such as legs projecting therefrom, said construction parts being endwise tenon joined with the holding body by means of an end portion of the construction part having a non-circular cross section and being slightly tapered from the full thickness or outer surface contour of the construction part, said end portion being held in a correspondingly large and tapered hole in the holding body.

Up through the furniture history a wide variety of joining means and methods has been used and suggested, including sophisticated auxiliary means for providing reliable joints. Ideally, however, the joints should include nothing but the two parts to be joined, perhaps with the exception of some glue between them, and it is the purpose of the present invention to provide an improved joint of this ideal type.

The invention is built on the old idea that a good joint is achievable when the structural element or construction part such as a chair leg is connected to the holding body by means of a simple tenon joint, whereby a protruding pin or tenon on the end of the construction part is forced into a receiving hole in the said holding body until the end or shoulder surface portion of the construction part around the root of the tenon engages the surface of the holding body around the tenon hole. This type of joint can be further improved by adding an amount of glue and/or by shaping the tenon and the tenon hole as conical elements. The known tenon joints, however, are not fully satisfactory, because they are after all sensible to rotary forces tending to twist the construction part relative to the core portion thereof which is extended into the tenon, whereby the material may split longitudinally, and to rocking forces giving rise to a crowbar effect, whereby the joint is affected by a separation momentum about the outer edge of the said shoulder surface portion of the construction part. The latter effect is particularly actual when the construction part is joined to the holding body at a visible surface portion thereof, because the shoulder surface portion should then fit accurately against the surface of the holding body in order to avoid any visible gap of the joint. Besides, this requirement may complicate the shaping of the shoulder portion when the relevant surface portion of the holding body is non-planar.

A furniture chassis of the type indicated in the introductory part of claim 1 is known from DE—C—333,832. However, the known joint is meant for a different type of furniture, i.e. a table with disconnectable legs. The fastening effect is mainly achieved by the vertically projecting of the end portions in the tapered holes. Moreover the end portions and tapered holes have complicated costly forms, i.e. a compound L-form with tapered free edges, whereas the L-body planes are not tapered, which can result in a visible gap.

Object of the invention is to provide a furniture chassis and particularly, though not exclusively, a lightweight chair, stool or table eliminating the above-mentioned disadvantages and problems and resulting in manufacturing and dimensioning advantages by also being able to transfer considerable twisting loads regardless the projecting direction of the end portion and to result in a joint without a visible gap.

According to the invention there is achieved with a furniture chassis of the above-mentioned type in that the construction part is of generally flat cross section and the end portion thereof is planar tapered on the opposed broad sides and semi circularly tapered on the opposed narrow sides, i.e. the tenon is manufactured in one piece and constituted by the entire end portion of the construction part, without the same being abruptly reduced in thickness except that it is shaped slightly tapered from its full thickness and is pronounced non-circular in cross section. By this construction the tenon will show maximum strength, and no crowbar effect can occur. The tenon and the tenon hole, of course, should be machined with good precision in order to define a desired entrance depth of the tenon, when no shoulder surface is present on the construction part. On the other hand, when the tenon fits snugly in the tenon hole there will be no visible groove in the joint irrespectively of the shape of the surface of the holding part.

When made with a suitable small tapering the tenon will be to a high degree self locking in the hole, but the joint is well suited to be stabilized by means of glue. Because the cooperating surface portions are tapered the insertion of the tenon will not result in any pronounced scraper action on the preapplied glue, i.e. the glue will remain effective and will not be liable to get displaced and collected as a collar about the visible root portion of the tenon.

A joint according to the invention may show a remarkable strength and is particularly well suited for use in high quality furniture. It is a special advantage that the joint is usable on visible surfaces without special precautions or extra difficulties even when the relevant surface portion of the holding part is non-planar, and the joint, therefore, is highly advantageous for use on the outer cylindrical surface of a chair seat or a table plate for the fastening of upper leg ends as provided with a laterally projecting tenon end. Such a peripheral mounting of the legs is normally a condition for the production of stackable chairs or tables.

In the following the invention is described in more detail with reference to the drawing, in which:—

Fig. 1 is a lateral view, partly in section, of a joint according to the invention,

Fig. 2 is a plan view of the joint seen from below,

Fig. 3 is a plan view thereof seen from the left of Fig. 1,

Fig. 4 is a perspective, partly exploded view of a chair showing joints according to Figs. 1—3,

Fig. 5 is a perspective view of a number of stacked stools showing similar joints, and

Fig. 6 is a sectional view of a modified joint.

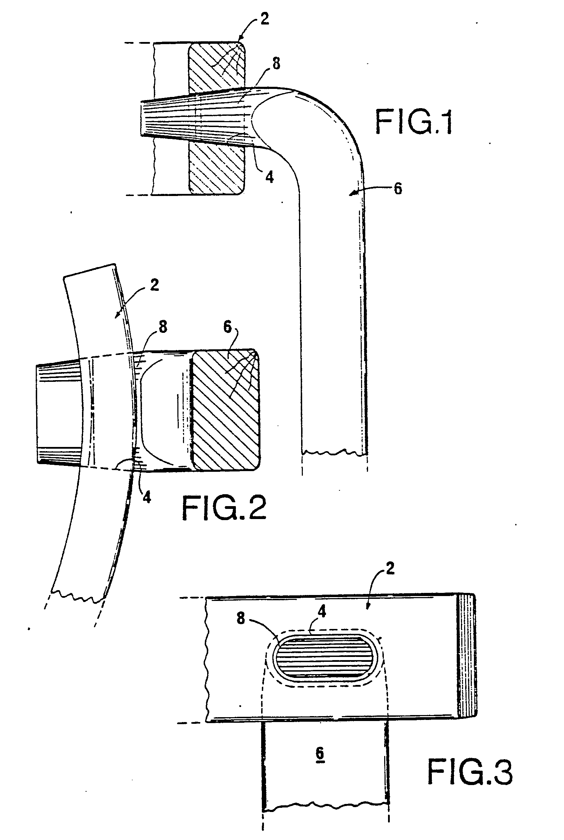

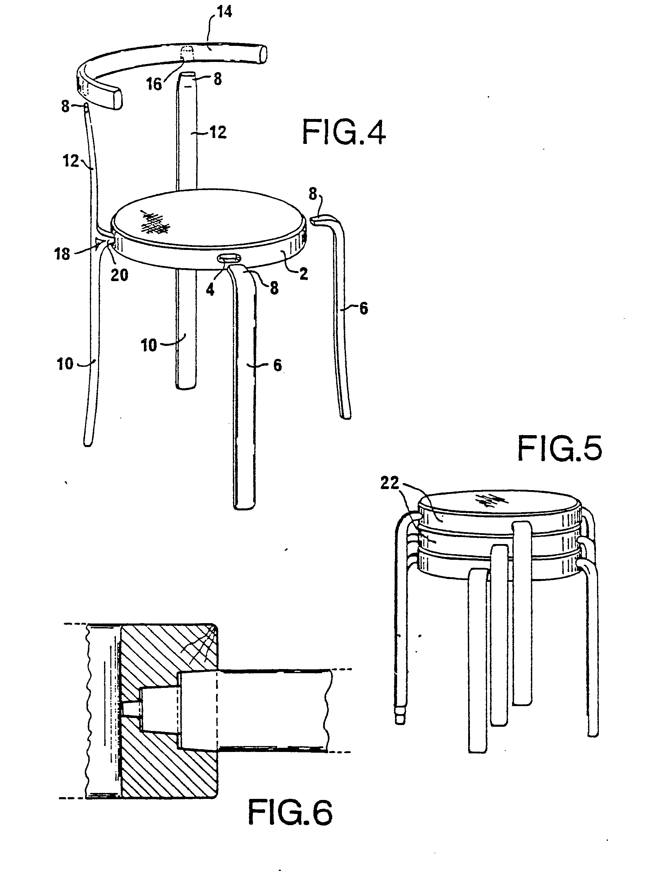

The joint illustrated in Figs. 1—3 refers to the chair shown in Fig. 4, this chair having a seat with an outer annular seat frame 2, in which is provided holes 4 for receiving the upper ends of a pair of front legs 6. As clearly shown in Figs. 1—3 each hole 4 is horizontally oblong and is slightly tapered, while the upper end of the leg 6 is bent through 90° and has an outer tenon portion 8 which is correspondingly tapered and horizontally oblong so as to fit into the hole 4. The tapered tenon portion 8 is made as a direct continuation of the leg 6, without any stepwise or abrupt reduction of the cross section thereof, i.e. without any shoulder being formed between the leg 6 and the tenon portion 8.

Preparatory to the insertion of the tenon portion 8 into the hole 4 a suitable glue such as a so-called PVAC-glue is applied to the surfaces of both the hole and the tenon. As far as the binding between the surfaces is concerned it would be sufficient to apply the glue to one of the surfaces only, but the application of glue to both surfaces is extremely advantageous in connection with wooden surfaces, partly because a possible surface dust layer as resulting from the preparatory machining of the surfaces is hereby broken or caused to be effectively penetrated by the glue and partly because the wooden surfaces are caused to swell, whereby the mechanical self locking action between the tapered surfaces is increased. In order to ascertain a rigid joint the tenon portion 8 should of course be forced into the hole 4 with a considerable pressure, and even in this connection the use of glue is advantageous, because it shows a lubricating effect which facilitates the intrusion of the tenon portion 8 into its final position in the hole 4.

The chair shown in Fig. 4 has two rear legs 10 having upper extensions 12 which hold a backrest member 14. The upper ends of the extensions 12 are shaped as flat tapered tenon portions 8 which are received in corresponding tenon holes 16, these holes being non-throughgoing in the backrest member 14, whereby the holes should be made with a depth slightly larger than the final intrusion depth of the tenon portions 8. Even in Figs. 1 and 2 it is shown by a double dot and dash line that the hole 4 in the seat frame 2 may be non-throughgoing when the end of the tenon 8 is slightly spaced from the bottom of the hole. Ideally the tenon end should be forced at least lightly against the hole bottom, but this would require the tapered surfaces to be prepared with an unrealistic high degree of accuracy. The accuracy shall be rather high anyway when or as it is a condition that the tapered portions themselves define the entrance depth of construction part.

The chair shown in Fig. 4 is made generally of laminated wood, which is particularly well suited, and the rear legs 10 are provided with a generally triangular middle block 18 serving as a core for a branched off portion 20 of the laminated wood, this portion being shaped endwise as a flat tenon portion 8 which is mounted in a tapered hole 4 similar to the mounting of the front legs 6.

Fig. 5 shows a pile of stools or tables 22 each having four legs corresponding to the legs 6 of Fig. 4.

It has been emphasized that the tenon end portions of the construction parts should not be of any abruptly reduced cross section, but of course this applies to the more or less visible root portion of the tenon, while in some construction it could well be desirable to provide the free tenon end with one or more portions of reduced cross section as illustrated in Fig. 6.

The invention primarily relates to wooden constructions, though other materials are in no way excluded. Experiments have shown that a tapering of some 1:10 or generally between 1:5 and 1:15 should be preferred. By way of example, in a laminated beech construction a tapering of 1:10 and an insertion pressure of 250 kp have proved to result in a very strong and satisfactory joint.

Many furniture constructions include parts of elements which are merely filler elements as distinguished from primary construction parts. Such filler elements, of course, may also be fastened in accordance with the invention, though the remarkable features and results of the invention are primarily related to the fastening of the said primary construction parts.

## Claims

1. A furniture chassis having a holding body such as a chair seat frame (2) and elongate construction parts such as legs (6, 10) projecting therefrom, said construction parts being endwise tenon joined with the holding body by means of an end portion (8) of the construction part (6, 10) having a non-circular cross section and being slightly tapered from the full thickness or outer surface contour of the construction part (6, 10), said end portion (8) being held in a correspondingly large and tapered hole (4) in the holding body (2), characterized in that the construction part (6) is of generally flat cross section and the end portion (8) thereof is planar tapered on the opposed broad sides and semi circularly tapered on the opposed narrow sides.

2. A chassis according to claim 1, in which the starting area of the tapering end portion (8) of the construction part (6) is located substantially exactly flush with the front edge of the receiving hole (4) of the holding part (2).

3. A chassis according to claim 1 and 2, in which the joint is additionally secured by means of glue between the tapered surfaces.

4. A chassis according to any of the preceding claims, in which the construction parts (6, 10) are made of laminated wood and are bent through ca. 90° immediately outside the joining area.

5. A chassis according to claim 4, in which the construction part (10) is extended beyond the bent end portion such that the said end portion constitutes a lateral protrusion (20) on a throughgoing construction element (10, 12).

6. A chassis according to claim 5, in which the construction element is a leg member of which the said lateral protrusion (20) is joined with a chair seat (2) or a table plate member, while the top end thereof is correspondingly joined to a backrest member (14) or another table plate member, respectively.

## Revendications

1. Châssis de meuble comportant un corps de maintien, tel qu'un cadre (2) de siège de chaise et des éléments allongés de montage comme des pieds (6, 10) qui en font saillie, lesdits éléments de montage étant reliés au corps de maintien par leur extrémité, par un joint à tenon à l'aide d'une partie extrême (8) de l'élément (6, 10) de montage qui a une section transversale non circulaire et légèrement effilée par rapport à la pleine épaisseur ou au plein contour externe de surface de l'élément (6, 10) de montage, ladite partie extrême (8) étant maintenue dans un trou (4) de largeur et de conicité correspondantes dans le corps (2) de maintien, châssis caractérisé en ce que l'élément (6) de montage a une section transversale généralement plane et en ce que sa partie extrême (8) est plane et effilée sur les côtés larges opposés et est effilée selon un profil semi-circulaire sur les côtés étroits opposés.

2. Châssis selon la revendication 1, dans lequel la surface de départ de la partie extrême (8) effilée de l'élément (6) de montage est située de façon essentiellement exacte au ras du bord avant du trou (4) récepteur ménagé dans la partie (2) de maintien.

3. Châssis selon la revendication 1 et 2, dans lequel le joint est fixé, en outre, à l'aide d'une colle entre les surfaces coniques effilées.

4. Châssis selon l'une quelconque des revendications précédentes, dans lequel les éléments (6, 10) de montage sont en contre-plaqué et sont cintrés sur 90° environ immédiatement à l'extérieur de la zone de jonction.

5. Châssis selon la revendication 4, dans lequel l'élément (10) de montage se prolonge au delà de la partie extrême cintrée de sorte que ladite partie extrême cintrée constitue une saillie latérale (20) sur un élément (10, 12) prolongé de montage.

6. Châssis selon la revendication 5, dans lequel l'élément de montage est un pied, dont ladite saillie latérale (20) est reliée par jonction à un siège (2) de chaise ou à un élément de table en forme de plateau, cependant que son extrémité supérieure est reliée, de façon correspondante, par jonction à un élément (14) formant dossier ou à un autre élément de table formant plateau, respectivement.

## Patentansprüche

1. Möbelchassis mit einem Haltekörper, z.B. in Form eines Stuhlsitzrahmens (2), und länglichen, von diesem vorstehenden Bauelementen, z.B. in Form von Beinen (6, 10), welche Bauelemente an ihren Enden durch eine Zapfenverbindung mit den Haltekörper verbunden sind mittels eines Endteils (8) des Bauelements (6, 10), das einen von der Kreisform abweichenden Querschnitt aufweist und sich von der vollen Dicke oder Aussenflächenkontur des Bauelements (6, 10) leicht konisch verjüngt, welches Endteil (8) von einem entsprechend grossen und konisch ausgebildeten Loch (4) im Haltekörper (2) aufgenommen wird, dadurch gekennzeichnet, dass das Bauelement (6) einen im wesentlichen flachen Querschnitt aufweist und sein Endteil (8) an den gegenüberliegenden breiten Seiten eben konisch und an den gegenüberliegenden schmalen Seiten halbkreisförmig konisch ausgebildet ist.

2. Chassis nach Anspruch 1, in dem der Anfang des könischen Endteils (8) des Bauelements (6) im wesentlichen genau mit der Vorderkante des Aufnahmeloches (4) des Haltekörpers (2) fluchtet.

3. Chassis nach Anspruch 1 und 2, in dem die Verbindung zusätzlich durch Leim zwischen den konischen Flächen gesichert ist.

4. Chassis nach einem der vorhergehenden Ansprüche, in dem die Bauelemente (6, 10) aus geschichtetem Holz bestehen und unmittelbar ausserhalb des Verbindungsbereiches um etwa 90° gebogen sind.

5. Chassis nach Anspruch 4, in dem das Bauelement (10) sich über das gebogene Endteil derart hinausstreckt, dass dieses Endteil einen seitlichen Vorsprung (20) an einem durchgehenden Bauelement (10, 12) bildet.

6. Chassis nach Anspruch 5, in dem das Bauelement aus einem Bein besteht, bei dem der seitliche Vorsprung (20) mit einem Stuhlsitz (2) oder einem Tischplattenelement verbunden ist, während sein oberes Ende mit einer Rückenlehne (14) oder einem weiteren Tischplattenelement entsprechend verbunden ist.

FIG.1

FIG.2

FIG.3

FIG.4

FIG.5

FIG.6